# EUROPÄISCHE PATENTSCHRIFT

(11) **EP 3 890 894 B1**
(45) Veröffentlichungstag und Bekanntmachung des Hinweises auf die Patenterteilung: **16.08.2023**
(21) Anmeldenummer: 19813317.5
(22) Anmeldetag: 02.12.2019
(51) Int. Cl.: B05B 14/00, B05B 15/55, B01D 53/26, B01D 46/00

(54) **AUFFANGVORRICHTUNG FÜR SPÜLMEDIEN EINES ZERSTÄUBERS**
COLLECTING DEVICE FOR A SPRAYER CLEANING FLUID
DISPOSITIF DE COLLECTE DE FLUIDE DE NETTOYAGE DE PULVÉRISATEUR

(30) Priorität: 04.12.2018 DE 102018130809
(43) Veröffentlichungstag der Anmeldung: 13.10.2021
(73) Patentinhaber: Dürr Systems AG, 74321 Bietigheim-Bissingen (DE)
(72) Erfinder: SCHLICHENMAIER, Sandra, 71254 Ditzingen (DE); BUCK, Thomas, 74343 Sachsenheim (DE)
(74) Vertreter: v. Bezold & Partner Patentanwälte - PartG mbB
(86) Internationale Anmeldenummer: PCT/EP2019/083282
(87) Internationale Veröffentlichungsnummer: WO 2020/114956

(56) Entgegenhaltungen:
- KR-A- 20140 008 828
- US-A- 4 827 955
- US-A- 5 316 588

## Beschreibung

Die Erfindung betrifft eine Auffangvorrichtung zum Auffangen von fluiden Medien (z.B. Spülmittel, Lackreste), die beim Reinigen (z.B. Kurzspülen, Farbwechselspülen) eines Zerstäubers (z.B. Rotationszerstäuber) in einer Lackieranlage anfallen. Weiterhin umfasst die Erfindung ein entsprechendes Betriebsverfahren.

In modernen Lackieranlagen zur Lackierung von Kraftfahrzeugkarosseriebauteilen werden zur Lackapplikation üblicherweise Rotationszerstäuber eingesetzt, die einen Sprühstrahl des zu applizierenden Lacks abgeben. Bei einem Farbwechsel und bei Betriebsunterbrechungen beispielsweise während der Nacht oder während des Wochenendes müssen diese Rotationszerstäuber innen gespült und außen gereinigt werden, um Lackablagerungen und Verunreinigungen durch Restfarbe zu vermeiden. Dabei werden die innenliegenden Kanäle des Rotationszerstäubers üblicherweise mit einem Spülmittel gespült, um die in dem Rotationszerstäuber verbliebene Farbe auszuspülen. Früher gingen diese Spülvorgänge der Rotationszerstäuber in die sogenannte Nassauswaschung unter der Lackierkabine. Seit der Einführung von Trockenauswaschungen ist dies jedoch nicht mehr möglich, so dass hierzu separate Auffangvorrichtungen (z.B. Trichter) eingesetzt werden. Teilweise werden Geräte, die zur Außenreinigung des Zerstäubers dienen und beispielsweise in EP 1 367 302 A2 beschrieben sind, zum Auffangen der Medien der Spülprozesse verwendet. Für einen Reinigungs- bzw. Spülvorgang wird der zu reinigende Rotationszerstäuber von einem Lackierroboter in das Reinigungsgerät eingeführt und dann in dem Reinigungsgerät gereinigt.

Diese bekannte Technologie z.B. mit Trichtern zum Auffangen der Spülmedien ist jedoch mit verschiedenen Nachteilen verbunden. Wird Zweikomponentenmaterial (2K-Material) aus dem Zerstäuber in den Trichter gespült, muss verhindert werden, dass dieses in dem Trichter aushärtet. Dazu muss der Trichter mit Lösungsmittel (Schmutzverdünner) versorgt werden, was energetisch teuer ist. Darüber hinaus erzeugt auch die anschließende Aufbereitung der Reste von Lack und Lösungsmittel einen hohen Kostenaufwand. Um den Energieaufwand gering zu halten, wird das Lösemittel zum Freihalten der Trichter vom Farbmischraum aus getaktet, was eine komplexe Kommunikation mit der Robotersteuerung erfordert. Weiterhin besteht die Gefahr, dass die Trichter verstopfen, beispielsweise durch zu viel Vaseline, Tücher, Lappen, Abfall, etc. Schließlich führen die bekannten Reinigungsgeräte in der Lackierkabine zu Emissionen von flüchtigen organischen Verbindungen (VOC: Volatile Organic Compounds).

Werden die Spülprozesse in einem Reinigungsgerät zur Reinigung der Zerstäuberaußenfläche durchgeführt, besteht beim Spülen von 2K-Material die Gefahr, dass evtl. bewegte Teile oder Bauteile mit Öffnungen (z.B. Düsen) sich zusetzen und die Reinigungsfunktion des Geräts nicht mehr gegeben ist.

Zum Stand der Technik ist auch hinzuweisen auf US 2012/0042912 A1, US 5 316 588 A und KR 2014 0008828 A.

Weiterhin offenbart EP 1 346 777 A1 eine Messvorrichtung, die eine Reinigung eines Zerstäubers ermöglicht. Hierbei ist an der Unterseite des Auffangbehälters ein Ablauf angeordnet, der durch eine Klappe während eines Reinigungsvorgangs geschlossen ist und nach einem Reinigungsvorgang geöffnet wird, damit Beschichtungsmittelreste in den Ablauf austreten können. Nachteilig ist hierbei die Tatsache, dass die Ablaufleitung gespült werden muss.

Schließlich offenbart US 4 827 955 A eine Auffangvorrichtung gemäß dem Oberbegriff von Anspruch 1. Diese bekannte Auffangvorrichtung ist jedoch nicht vollständig befriedigend.

Der Erfindung liegt deshalb die Aufgabe zugrunde, eine entsprechend verbesserte Auffangvorrichtung für das ausgespülte Lackmaterial (vorrangig 2K) und ein entsprechendes Betriebsverfahren zu schaffen.

Diese Aufgabe wird durch eine erfindungsgemäße Auffangvorrichtung gemäß dem Hauptanspruch und ein entsprechendes Betriebsverfahren gelöst.

Die Erfindung beruht auf der technisch-physikalischen Erkenntnis, dass bei den bekannten Reinigungsgeräten und Auffangvorrichtungen während des Spülprozesses feuchte, turbulente Luft innerhalb der Auffangvorrichtung entsteht, die sich in Form von Feuchtigkeit auf dem Zerstäubergehäuse absetzen kann. Diese Feuchtigkeit auf dem Zerstäubergehäuse führt jedoch zu erhöhter Verschmutzung der Außenhülle des Zerstäubers beim Lackieren. Darüber hinaus kann es aufgrund der Feuchtigkeit auf der Außenhülle des Zerstäubers zu Hochspannungsstörungen der elektrostatischen Beschichtungsmittelaufladung kommen. Schließlich kann die Feuchtigkeit auf der Außenhülle des Zerstäubers auch zu Fehlerbildern der lackierten Oberfläche führen. Die Erfindung zielt deshalb auch darauf ab, diese feuchte, turbulente Luft in der Auffangvorrichtung zu vermeiden.

Die erfindungsgemäße Auffangvorrichtung weist zunächst in Übereinstimmung mit den eingangs beschriebenen bekannten Auffangvorrichtungen (z.B. Trichter) einen weitgehend geschlossenen Auffangbehälter auf, der vorzugsweise an seiner Oberseite eine Einführöffnung aufweist, durch die der Zerstäuber für einen Spülvorgang in den Auffangbehälter eingeführt werden kann. Die seitliche Behälterwandung des Auffangbehälters begrenzt den Auffangbehälter hierbei nach außen und ist für Lack im Wesentlichen undurchlässig, um bei einem Spülvorgang einen Lackaustritt aus dem Auffangbehälter zu verhindern.

Die erfindungsgemäße Auffangvorrichtung unterscheidet sich nun von der eingangs beschriebenen bekannten Auffangvorrichtung (z.B. mit einem Trichter) dadurch, dass die seitliche Behälterwandung des Auffangbehälters mindestens teilweise luftdurchlässig ist, damit feuchte Luft aus dem Innenraum des Auffangbehälters nach außen entweichen kann. Dadurch wird vorteilhaft verhindert, dass sich während eines Spülvorganges Feuchtigkeit auf der Außenhülle des zu reinigenden Zerstäubers absetzen kann, da derartige Feuchtigkeit mit den vorstehend beschriebenen Problemen verbunden ist.

Gemäß der Erfindung wird die Luftdurchlässigkeit der Behälterwandung durch zahlreiche Luftaustrittsöffnungen in der Behälterwandung erreicht, so dass die feuchte Luft aus dem Innenraum des Auffangbehälters durch die Luftaustrittsöffnungen nach außen entweichen kann.

Beispielsweise kann die Anzahl der Luftaustrittsöffnungen größer als 10, 20 oder 50 sein, um eine ausreichende Luftdurchlässigkeit zu erreichen.

Vorzugsweise beträgt der Gesamtquerschnitt der Luftaustrittsöffnungen mindestens 5%, 10%, 20%, 30%, 40%, 50%, 60% oder 70% der gesamten Wandfläche der Behälterwandung, um eine ausreichende Luftdurchlässigkeit der Behälterwandung zu erreichen.

Ein großer Vorteil des Auffangbehälters ist, dass er über keine Medienzuleitungen verfügt, wodurch keine Softwareansteuerung nötig ist und eine Nachrüstung ohne zusätzliche Ventile oder Verschlauchung erfolgen kann.

In dem bevorzugten Ausführungsbeispiel der Erfindung ist der Querschnitt der einzelnen Luftaustrittsöffnungen nicht einheitlich, d.h. die einzelnen Luftaustrittsöffnungen weisen unterschiedliche Querschnitte auf. Vorzugsweise ist der Querschnitt der Luftaustrittsöffnungen nahe der Einführöffnung des Auffangbehälters (d.h. oben) am größten und nimmt dann in einer oder mehreren Stufen in der Einführrichtung (d.h. nach unten) ab, um im Mittelbereich ein Minimum zu erreichen. Anschließend nimmt der Querschnitt der Luftaustrittsöffnungen dann zum Boden des Auffangbehälters hin wieder zu und zwar vorzugsweise in einer einzigen Stufe. Die Luftaustrittsöffnungen können also beispielsweise vier unterschiedlich große Querschnitte aufweisen. Hierbei ist zu erwähnen, dass der Querschnitt der einzelnen Luftaustrittsöffnungen vorzugsweise nur entlang der Einführrichtung variiert, wohingegen der Querschnitt der einzelnen Luftaustrittsöffnungen in Umfangsrichtung des Auffangbehälters vorzugsweise einheitlich ist.

Weiterhin ist zu erwähnen, dass die Luftaustrittsöffnungen einen bestimmten Strömungswiderstand bilden und dadurch die Austrittsgeschwindigkeit der durch die Luftaustrittsöffnung ausströmenden Luft verringern. Dies ist insbesondere dann vorteilhaft, wenn die Behälterwandung einen flächigen Lackfilter aufweist, der den Lack in dem Lackfilter zurückhält und dadurch verhindert, dass der Lack aus dem Auffangbehälter nach außen austritt. Die Austrittsgeschwindigkeit der durch die Luftaustrittsöffnungen aus dem Auffangbehälter ausströmenden Luft ist deshalb vorzugsweise kleiner als 5m/s, 4m/s, 3m/s, 2m/s oder sogar kleiner als 1m/s. In dem bevorzugten Ausführungsbeispiel der Erfindung liegt die Austrittsgeschwindigkeit der ausströmenden Luft im Bereich von 0,05m/s bis 2m/s, wobei sich ein Wert von im Wesentlichen 0,5m/s als vorteilhaft erwiesen hat.

Es wurde bereits vorstehend kurz erwähnt, dass die Behälterwandung in der Regel einen flächigen Lackfilter aufweist, um trotz der Luftdurchlässigkeit der Behälterwandung zu verhindern, dass Lack aus dem Innenraum des Auffangbehälters nach außen austritt. Vorzugsweise ist dieser Lackfilter an der Innenseite der Behälterwandung angeordnet, jedoch besteht grundsätzlich auch die Möglichkeit, dass der Lackfilter an der Außenseite der Behälterwandung angebracht ist.

In dem bevorzugten Ausführungsbeispiel der Erfindung handelt es sich bei dem Lackfilter um Filtermatten, welche die Behälterwandung bedecken, wobei derartige Filtermatten an sich aus dem Stand der Technik bekannt sind und deshalb nicht näher beschrieben werden müssen.

Es ist jedoch zu erwähnen, dass der Lackfilter (z.B. Filtermatten) die Luftaustrittsöffnungen vollständig bedecken sollte, um einen störenden Lackaustritt zu vermeiden.

Weiterhin ist zu erwähnen, dass der Lackfilter (z.B. Filtermatten) vorzugsweise auswechselbar ist. Dies ist sinnvoll, da der Lackfilter im Betrieb mit dem aufgefangenen Lack zunehmend zusetzt, so dass der Lackfilter (z.B. Filtermatten) rechtzeitig vor dem vollständigen Zusetzen ausgewechselt werden sollte.

Ferner ist zu erwähnen, dass der Lackfilter den Lack mit einem bestimmten quantitativen Aufnahmevermögen aufnehmen kann, d.h. der Lackfilter kann eine bestimmte Menge des Lacks bis zum Zusetzen des Lackfilters aufnehmen. Vorzugsweise ist dieses quantitative Aufnahmevermögen des Lackfilters wesentlich größer als die bei einem Spülvorgang anfallende Lackmenge, insbesondere um den Faktor 2, 3, 4, 5, 10, 20 oder 50 bis über 1000. Dies ist sinnvoll, damit der Lackfilter nicht oft ausgewechselt werden muss.

Darüber hinaus ist zu erwähnen, dass sich der Lackfilter (z.B. Filtermatten) vorzugsweise über die komplette seitliche und untere Behälterwandung erstreckt.

Gemäß der Erfindung weist der Auffangbehälter einen Ablauf auf, der vorzugsweise an der Unterseite des Auffangbehälters angeordnet ist und zur Abführung von Lackresten und/oder von Spülmittel dient.

Da der Großteil des Lacks in dem Lackfilter (z.B. Filtermatten) aufgefangen wird, gelangt nur sehr stark verdünntes Lackmaterial durch den Ablauf in die Rückführung. Dies bietet den Vorteil, dass die Rückführung nicht gespült werden muss, da das Lackmaterial so sehr verdünnt ist, dass es nicht in den Leitungen verklebt. Dies spart in hohem Maße Energie und Material für die Versorgung und Aufbereitung von Schmutzverdünner.

Weiterhin ist zu erwähnen, dass die üblichen Rotationszerstäuber im Bereich zwischen dem rotierenden Glockenteller und dem Lenkluftring üblicherweise ein Unterdruckgebiet aufweisen. Bei einem Spülvorgang kann dieses Unterdruckgebiet dazu führen, dass feuchte Luft aus dem Auffangbehälter heraus an die Zerstäuberoberfläche gezogen wird, was unerwünscht ist. Der zu spülende Zerstäuber wird deshalb vorzugsweise so weit in den Auffangbehälter eingeführt, dass sich das Unterdruckgebiet des Zerstäubers bei einem Reinigungsvorgang innerhalb des Auffangbehälters befindet. Dadurch wird verhindert, dass das Unterdruckgebiet zwischen dem Glockenteller und dem Lenkluftring zum Austreten von feuchter Luft aus dem Auffangbehälter führt. Der Auffangbehälter weist deshalb vorzugsweise eine ausreichende Eintauchtiefe auf, um dieses tiefe Einführen des zu spülenden Zerstäubers zu ermöglichen.

Wegen des vorstehend beschriebenen Unterdruckgebiets zwischen dem rotierenden Glockenteller und dem Lenkluftring des Rotationszerstäubers sollte es bei einem Spülvorgang auch möglich sein, dass Umgebungsluft in den Auffangbehälter einströmen kann. Die Einführöffnung des Auffangbehälters ist deshalb vorzugsweise deutlich größer als der stirnseitige Außendurchmesser des Zerstäubergehäuses ("Tubus"), damit durch den dazwischen verbleibenden Ringspalt Umgebungsluft in den Auffangbehälter einströmen kann. Der Innendurchmesser der Einführöffnung des Auffangbehälters ist deshalb vorzugsweise größer als 150%, 200%, 250% oder 300% des stirnseitigen Außendurchmessers des Zerstäubergehäuses.

Weiterhin ist zu erwähnen, dass der Auffangbehälter ein ausreichend großes Innenvolumen aufweisen sollte. So entsteht bei einem Spülvorgang eine bestimmte Luftmenge, da beispielsweise Luft aus den Lenkluftdüsen des Zerstäubers abgegeben wird. Das Innenvolumen des Auffangbehälters sollte deshalb mindestens ein Drittel und/oder höchstens das Doppelte der Reinigungsluftmenge betragen, die bei einem Reinigungsvorgang anfällt. In dem bevorzugten Ausführungsbeispiel der Erfindung beträgt das Innenvolumen des Auffangbehälters im Wesentlichen zwei Drittel der Luftmenge, die bei einem einzelnen Spülvorgang anfällt. Bei unterschiedlichen möglichen Spülvorgängen mit verschiedenen Parametern erfolgt diese Anpassung vorzugsweise in Bezug auf den Spülvorgang mit der größten Luftmenge.

Ferner ist zu erwähnen, dass bei dem erfindungsgemäßen Auffangbehälter vorzugsweise der Durchmesser und die Höhe im Wesentlichen gleich sind.

An seiner Oberseite ist der Auffangbehälter im Betrieb in der Regel durch einen Deckel verschlossen, wobei sich in dem Deckel die Einführöffnung befindet. Dieser Deckel kann von außen betrachtet wahlweise eben, konkav oder konvex sein und hat die Aufgabe, einen Austritt von VOCs aus dem Auffangbehälter zu verhindern.

Die Erfindung beansprucht jedoch nicht nur Schutz für die vorstehend beschriebene Auffangvorrichtung. Vielmehr beansprucht die Erfindung auch Schutz für ein entsprechendes Betriebsverfahren. Die Einzelheiten des erfindungsgemäßen Betriebsverfahrens ergeben sich im Wesentlichen bereits aus der vorstehenden Beschreibung der erfindungsgemäßen Auffangvorrichtung, so dass auf eine vollständige separate Beschreibung des erfindungsgemäßen Betriebsverfahrens verzichtet werden kann.

Es ist jedoch zu erwähnen, dass bei einem Zerstäuber mit einer elektrostatischen Beschichtungsmittelaufladung im Betrieb die Gefahr eines Funkenüberschlags besteht. Der zu spülende Zerstäuber mit der elektrostatischen Beschichtungsmittelaufladung darf deshalb nur in den Auffangbehälter eingeführt werden, wenn die elektrostatische Beschichtungsmittelaufladung abgeschaltet ist, d.h. wenn der Zerstäuber spannungslos ist. Hierbei ist zu erwähnen, dass der Zerstäuber üblicherweise von einem Lackierroboter in den Auffangbehälter eingeführt wird, wobei der Lackierroboter von einer Robotersteuerung angesteuert wird. Die Erfindung sieht nun vorzugsweise vor, dass die Robotersteuerung bei eingeschalteter Beschichtungsmittelaufladung einen Sperrraum um den Auffangbehälter definiert, so dass der Zerstäuber bei eingeschalteter Beschichtungsmittelaufladung nicht in den Auffangbehälter eingeführt werden kann, um einen Funkenüberschlag zu vermeiden.

Besonders vorteilhaft eignet sich die Erfindung zum Auffangen der Spülmedien von Zerstäubern (z.B. Rotationszerstäuber), die Zweikomponentenlacke applizieren. Die Erfindung ist jedoch in gleicher Weise auch geeignet zum Auffangen der Spülmedien von Zerstäubern, die Einkomponentenlacke applizieren.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Perspektivansicht einer erfindungsgemäßen Auffangvorrichtung von schräg oben,
- Figur 2: eine Perspektivansicht der Auffangvorrichtung aus Figur 1 von schräg unten, sowie
- Figur 3: eine aufgeschnittene Perspektivansicht der Auffangvorrichtung aus den Figuren 1 und 2.

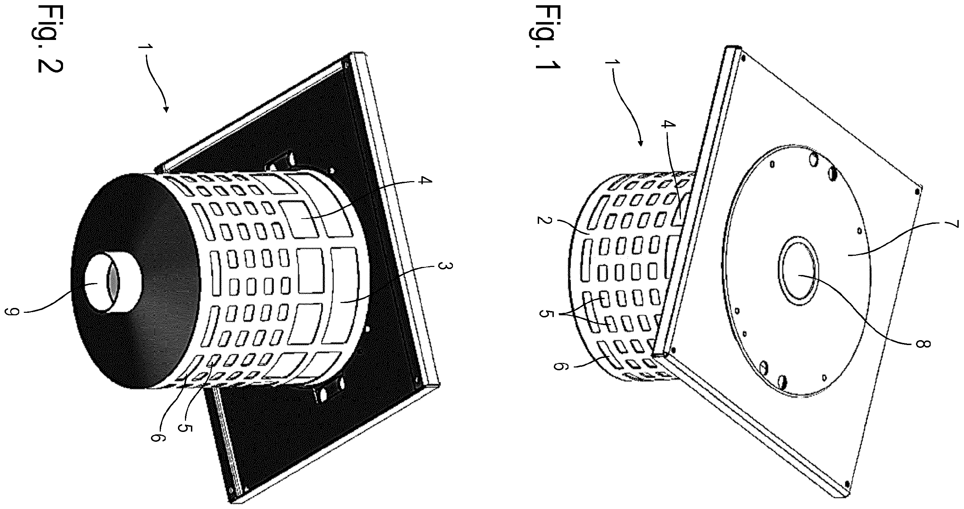

Im Folgenden wird nun ein bevorzugtes Ausführungsbeispiel einer erfindungsgemäßen Auffangvorrichtung beschrieben, wie es in den Figuren 1 bis 3 dargestellt ist.

Die erfindungsgemäße Auffangvorrichtung dient zum Auffangen der Spülmedien eines Rotationszerstäubers, der in einer Lackieranlage zur Lackierung von Kraftfahrzeugkarosseriebauteilen eingesetzt wird. Die erfindungsgemäße Auffangvorrichtung wird deshalb vorzugsweise innerhalb einer Lackierkabine beispielsweise am Boden der Lackierkabine vorzugsweise bodeneben angeordnet.

Die Auffangvorrichtung weist zunächst einen topfförmigen Auffangbehälter 1 auf, der zylindrisch geformt ist. Der Auffangbehälter 1 wird hierbei seitlich außen durch eine Behälterwandung 2 begrenzt, die an sich undurchlässig für Lack und Luft ist und in der Regel aus Stahl besteht. In der Behälterwandung 2 des Auffangbehälters 1 befinden sich jedoch zahlreiche Luftaustrittsöffnungen 3-6, um den Austritt von feuchter Luft aus dem Innenraum des Auffangbehälters 1 nach außen zu ermöglichen, wie noch detailliert beschrieben wird.

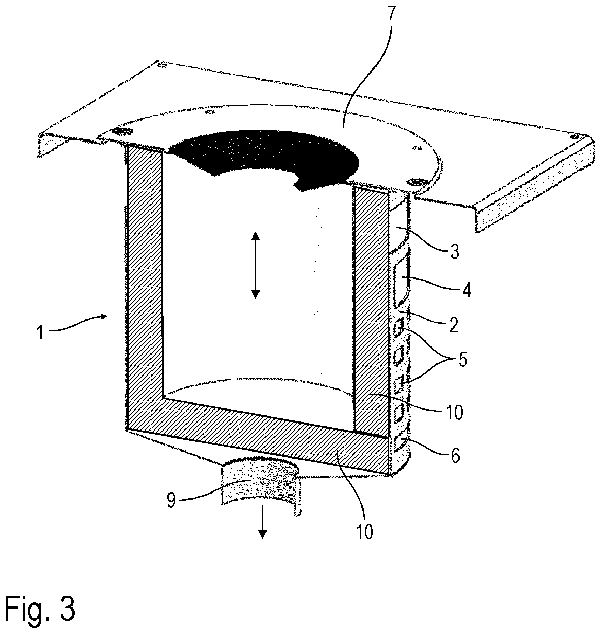

An seiner Oberseite ist der Auffangbehälter 1 durch einen Deckel 7 verschlossen, wobei sich in dem Deckel 7 eine Einführöffnung 8 zum Einführen eines Rotationszerstäubers befindet. In diesem Ausführungsbeispiel ist der Deckel 7 am Umfangsrand der Einführöffnung 8 von außen betrachtet konkav ausgebildet, wie aus Fig. 3 ersichtlich ist. Es ist jedoch alternativ auch möglich, dass der Deckel 7 von außen betrachtet konvex oder eben ausgebildet ist.

An seiner Unterseite weist der Auffangbehälter 1 einen Ablauf 9 auf, der mit einer Rückführung verbunden ist, um Reste von Lack und Lösemittel in die Rückführung abführen zu können.

An der Innenseite der Behälterwandung 2 ist die Behälterwandung 2 mit Filtermatten 10 bedeckt, die verhindern, dass Lack aus dem Innenraum des Auffangbehälters 1 durch die Luftaustrittsöffnungen 3-6 nach außen austreten kann. Die Filtermatten 10 fangen also einen Großteil des im Betrieb anfallenden Lacks auf. Dies ist auch vorteilhaft, weil so durch den Ablauf 9 nur geringe Restmengen des Lacks abgeführt werden müssen, so dass die Rückführung nicht gespült werden muss, da das Lackmaterial in der Rückführung so sehr verdünnt ist, dass es nicht in den Leitungen verklebt. Dies spart enorm Energie und Material für die Versorgung und Aufbereitung von Schmutzverdünner.

Weiterhin ist zu erwähnen, dass der Querschnitt der einzelnen Luftaustrittsöffnungen 3-6 nicht einheitlich konstant ist. Vielmehr variiert der Querschnitt der einzelnen Luftaustrittsöffnungen 3-6 entlang der Einführrichtung, die in Figur 3 durch einen Doppelpfeil dargestellt ist. So weisen die Luftaustrittsöffnungen 3 an der Oberseite des Auffangbehälters 1 den größten Querschnitt auf. Der Querschnitt der entlang der Einführrichtung folgenden Luftaustrittsöffnungen 4 ist dann noch ungefähr halb so groß. Die folgenden Luftaustrittsöffnungen 5 haben dann einen Querschnitt, der nur ungefähr einem Viertel des Querschnitts der Luftaustrittsöffnungen 4 entspricht. Entlang der Einführrichtung folgen dann schließlich die Luftaustrittsöffnungen 6, die wieder einen größeren Querschnitt haben, der ungefähr doppelt so groß ist wie der Querschnitt der Luftaustrittsöffnungen 5. Der Querschnitt der Luftaustrittsöffnungen 3-6 nimmt also in Einführrichtung von der Einführöffnung 8 ausgehend zunächst ab und erreicht dann bei den Luftaustrittsöffnungen 5 ein Minimum, um dann anschließend wieder zuzunehmen. Diese Gestaltung des Querschnitts der Luftaustrittsöffnungen 3-6 hat sich im Betrieb aus strömungsdynamischen Gründen als vorteilhaft erwiesen.

Weiterhin ist zu erwähnen, dass die Filtermatten 10 die Behälterwandung im Bereich der Luftaustrittsöffnungen 3-6 vollständig bedecken, um einen Lackaustritt zu vermeiden. Darüber hinaus bedecken die Filtermatten 10 vorzugsweise auch den Boden des Auffangbehälters 1, so dass Lack nur nach dem Passieren der Filtermatten 10 in den Ablauf 9 gelangen kann.

### Bezugszeichenliste:

- 1: Auffangbehälter
- 2: Behälterwandung des Auffangbehälters
- 3-6: Luftaustrittsöffnungen in der Behälterwandung
- 7: Deckel des Auffangbehälters
- 8: Einführöffnung in dem Deckel des Auffangbehälters
- 9: Ablauf
- 10: Filtermatten

## Patentansprüche

1. Auffangvorrichtung zum Auffangen von fluiden Medien, insbesondere Spülmittel und Lackresten, die beim Spülen eines Zerstäubers in einer Lackieranlage anfallen, mit
a) einem Auffangbehälter (1),
b) einer Einführöffnung (8), insbesondere an der Oberseite des Auffangbehälters (1), zum Einführen des Zerstäubers in den Auffangbehälter (1), und
c) einer seitlichen Behälterwandung (2), die den Auffangbehälter (1) außen begrenzt und für Lack im Wesentlichen undurchlässig ist, um einen Lackaustritt aus dem Auffangbehälter (1) zu verhindern, wobei die seitliche Behälterwandung (2) des Auffangbehälters (1) mindestens teilweise luftdurchlässig ist, damit feuchte Luft aus dem Innenraum des Auffangbehälters (1) nach außen entweichen kann,
d) einem Ablauf (9), um den Lack und/oder Spülmittel aus dem Auffangbehälter (1) abzuführen, und
e) einem Lackfilter (10), der im Strömungsweg in den Ablauf (9) angeordnet ist, so dass beim Strömen in den Ablauf (9) der Lackfilter (10) passiert werden muss,
**dadurch gekennzeichnet,**
f) **dass** die seitliche Behälterwandung (2) des Auffangbehälters (1) zahlreiche Luftaustrittsöffnungen (3-6) aufweist, wobei die feuchte Luft aus dem Innenraum des Auffangbehälters (1) durch die Luftaustrittsöffnungen (3-6) nach außen entweichen kann.

2. Auffangvorrichtung nach Anspruch 1, **dadurch gekennzeichnet,**
a) **dass** die Luftaustrittsöffnungen (3-6) zusammen eine bestimmten Gesamtquerschnitt haben,
b) **dass** die Behälterwandung (2) eine bestimmte Wandfläche aufweist,
c) **dass** der Gesamtquerschnitt der Luftaustrittsöffnungen (3-6) mindestens 5%, 10% oder 20% der gesamten Wandfläche der Behälterwandung (2) beträgt.

3. Auffangvorrichtung nach einem der vorhergehenden Ansprüche, **dadurch gekennzeichnet,**
a) **dass** der Querschnitt der einzelnen Luftaustrittsöffnungen (3-6) entlang der Einführrichtung variiert, insbesondere von einem großen Querschnitt nahe der Einführöffnung (8) über einen minimalen Querschnitt im Mittelbereich zu einem größeren Querschnitt in Bodennähe,
und/oder
b) **dass** der Querschnitt der einzelnen Luftaustrittsöffnungen (3-6) in Umfangsrichtung einheitlich ist.

4. Auffangvorrichtung nach einem der vorhergehenden Ansprüche, **dadurch gekennzeichnet,**
a) **dass** die Luftaustrittsöffnungen (3-6) einen bestimmten Strömungswiderstand bilden und dadurch die Austrittsgeschwindigkeit der durch die Luftaustrittsöffnungen (3-6) ausströmenden Luft verringern, und
b) **dass** die Austrittsgeschwindigkeit der durch die Luftaustrittsöffnungen (3-6) aus dem Auffangbehälter (1) ausströmenden Luft kleiner ist als 5m/s, 4m/s, 3m/s, 2m/s, 1m/s, insbesondere im Bereich von 0,05m/s-2m/s, insbesondere im Wesentlichen 0,5m/s.

5. Auffangvorrichtung nach einem der vorhergehenden Ansprüche, **dadurch gekennzeichnet, dass** die Behälterwandung (2) einen flächigen Lackfilter (10) aufweist, insbesondere an der Innenseite der Behälterwandung (2), wobei der Lackfilter (10) den Lack zurückhält und dadurch verhindert, dass der Lack aus dem Auffangbehälter (1) nach außen austritt.

6. Auffangvorrichtung nach Anspruch 5, **dadurch gekennzeichnet,**
a) **dass** der Lackfilter (10) mindestens eine Filtermatte (10) aufweist, welche die Behälterwandung (2) bedeckt, insbesondere an der Innenseite der Behälterwandung (2), und/oder
b) **dass** der Lackfilter (10) die Luftaustrittsöffnungen (3-6) vollständig bedeckt, und/oder
c) **dass** der Lackfilter (10) auswechselbar ist, und/oder
d) **dass** der Lackfilter (10) den Lack mit einem bestimmten quantitativen Aufnahmevermögen aufnehmen kann, wobei das quantitative Aufnahmevermögen des Lackfilters (10) größer ist als die bei einem Spülvorgang anfallende Lackmenge, insbesondere um den Faktor 2, 3, 4, 5, 10 oder 20, und/oder
e) **dass** sich der Lackfilter (10) über die komplette seitliche und untere Behälterwandung (2) erstreckt, und/oder
f) **dass** der Auffangbehälter (1) an seiner Oberseite durch einen Deckel (7) abgeschlossen ist, der von außen betrachtet eben, konkav oder konvex geformt ist.

7. Auffangvorrichtung nach einem der vorhergehenden Ansprüche, **dadurch gekennzeichnet,**
a) **dass** der Auffangbehälter (1) eine bestimmte maximale Eintauchtiefe aufweist, bis zu der der Zerstäuber durch die Einführöffnung (8) in den Auffangbehälter (1) eingeführt werden kann,
b) **dass** der Zerstäuber zwischen Glockenteller und Lenkluftring ein Unterdruckgebiet aufweist, und
c) **dass** die maximale Eintauchtiefe so groß ist, dass sich das Unterdruckgebiet des Zerstäubers bei einem Spülvorgang innerhalb des Auffangbehälters (1) befindet.

8. Auffangvorrichtung nach einem der vorhergehenden Ansprüche, **dadurch gekennzeichnet,**
a) **dass** die Einführöffnung (8) des Auffangbehälters (1) einen bestimmten Innendurchmesser aufweist,
b) **dass** der Zerstäuber ein Zerstäubergehäuse mit einem bestimmten stirnseitigen Außendurchmesser aufweist,
c) **dass** der Innendurchmesser der Einführöffnung (8) des Auffangbehälters (1) größer ist als der stirnseitige Außendurchmesser des Zerstäubergehäuses, damit Umgebungsluft von außen in den Auffangbehälter (1) zu dem Unterdruckgebiet einströmen kann, und
d) **dass** der Innendurchmesser der Einführöffnung (8) des Auffangbehälters (1) größer ist als 150%, 200%, 250% oder 300% des stirnseitigen Außendurchmessers des Zerstäubergehäuses.

9. Auffangvorrichtung nach einem der vorhergehenden Ansprüche, **dadurch gekennzeichnet,**
a) **dass** bei einem Spülvorgang eine bestimmte Spülluftmenge anfällt, insbesondere aus Lenkluftdüsen des Zerstäubers und aus einströmender Umgebungsluft,
b) **dass** der Auffangbehälter (1) ein bestimmtes Innenvolumen aufweist,
c) **dass** das Innenvolumen des Auffangbehälters (1) mindestens 1/3 und/oder höchstens das Doppelte der Spülluftmenge beträgt, insbesondere im Wesentlichen 2/3 der Spülluftmenge,
d) **dass** der Auffangbehälter (1) einen bestimmten Durchmesser und eine bestimmte Höhe aufweist, wobei der Durchmesser vorzugsweise im Wesentlichen gleich der Höhe ist.

10. Betriebsverfahren für eine Auffangvorrichtung zum Auffangen von fluiden Medien, insbesondere Spülmittel und Lackreste, die beim Spülen eines Zerstäubers in einer Lackieranlage anfallen, mit den folgenden Schritten:
a) Einführen des Zerstäubers in die Auffangvorrichtung, und
b) Spülen des Zerstäubers innerhalb der Auffangvorrichtung, wobei die zu aufzufangenden fluiden Medien anfallen,
**dadurch gekennzeichnet,**
c) **dass** die Auffangvorrichtung nach einem der vorhergehenden Ansprüche ausgebildet ist.

11. Betriebsverfahren nach Anspruch 10, **dadurch gekennzeichnet,**
a) **dass** beim Spülen Luft durch die Behälterwandung (2) aus dem Auffangbehälter (1) austritt, insbesondere durch die Luftaustrittsöffnungen (3-6) in der Behälterwandung (2), und
b) **dass** beim Spülen der Lack in der Behälterwandung (2) zurückgehalten wird, insbesondere in dem Lackfilter (10) der Behälterwandung (2).

12. Betriebsverfahren nach einem der Ansprüche 10 oder 11, **dadurch gekennzeichnet,**
a) **dass** bei einem Spülvorgang in dem Auffangbehälter (1) Lack anfällt, der zu einem Großteil von dem Lackfilter (10) aufgefangen wird, während der restliche Lack über einen Ablauf (9) aus dem Auffangbehälter (1) abgeführt wird,
b) **dass** der Lackfilter (10) vorzugsweise ausgewechselt wird, wenn er mit dem aufgefangenen Lack zugesetzt ist.

13. Betriebsverfahren nach einem der Ansprüche 10 bis 12, **dadurch gekennzeichnet,**
a) **dass** der Zerstäuber zwischen Glockenteller und Lenkluftring ein Unterdruckgebiet aufweist,
b) **dass** der Zerstäuber bei einem Spülvorgang so weit in den Auffangbehälter (1) eingeführt wird, dass sich das Unterdruckgebiet des Zerstäubers innerhalb des Auffangbehälters (1) befindet, und/oder
c) **dass** bei einem Spülvorgang Umgebungsluft von außen durch den Ringspalt zwischen dem Zerstäuber und der Einführöffnung (8) des Auffangbehälters (1) in den Auffangbehälter (1) in das Unterdruckgebiet des Zerstäubers einströmt.

14. Betriebsverfahren nach einem der Ansprüche 10 bis 13, **dadurch gekennzeichnet,**
a) **dass** der Zerstäuber eine elektrostatische Beschichtungsmittelaufladung aufweist,
b) **dass** der Zerstäuber von einem Lackierroboter in den Auffangbehälter (1) eingeführt wird,
c) **dass** der Lackierroboter von einer Robotersteuerung gesteuert wird, und
d) **dass** die Robotersteuerung bei eingeschalteter Beschichtungsmittelaufladung einen Sperrraum um den Auffangbehälter (1) definiert, so dass der Zerstäuber bei eingeschalteter Beschichtungsmittelaufladung nicht in den Auffangbehälter (1) eingeführt werden kann, um einen Funkenüberschlag zu verhindern.

15. Betriebsverfahren nach einem der Ansprüche 10 bis 14, **dadurch gekennzeichnet,**
a) **dass** der Zerstäuber in der Auffangvorrichtung mit einem Spülmittel gespült wird, und/oder
b) **dass** der Zerstäuber im Lackierbetrieb einen Einkomponentenlack oder einen Zweikomponentenlack appliziert und in der Auffangvorrichtung innen und außen von dem Einkomponentenlack bzw. dem Zweikomponentenlack gereinigt wird.

## Claims

1. Collecting device for collecting fluid media, in particular rinsing agent and paint residues, which arise when rinsing an atomizer in a painting installation, with
a) a collecting container (1),
b) an insertion opening (8), in particular at the top of the collecting container (1), for inserting the atomizer into the collecting container (1), and
c) a lateral container wall (2) which externally bounds the collecting container (1) and is substantially impermeable to paint in order to prevent paint from escaping from the collecting container (1), the lateral container wall (2) of the collecting container (1) being at least partially permeable to air in order to allow moist air to escape from the interior of the collecting container (1) to the outside,
d) an outlet (9) to drain the paint and/or rinsing agent from the collecting container (1), and
e) a paint filter (10) which is arranged in the flow path into the outlet (9), so that the paint filter (10) must be passed when flowing into the outlet (9),
**characterized in**
f) **that** the lateral container wall (2) of the collecting container (1) has numerous air outlet openings (3-6), wherein the moist air can escape from the interior of the collecting container (1) to the outside through the air outlet openings (3-6).

2. Collecting device according to claim 1, **characterized in**
a) **that** the air outlet openings (3-6) together have a certain total cross-section,
b) **that** the container wall (2) has a certain wall area,
c) **that** the total cross-section of the air outlet openings (3-6) is at least 5%, 10% or 20% of the total wall area of the container wall (2).

3. Collecting device according to of the preceding claims, **characterized in**
a) **that** the cross-section of the individual air outlet openings (3-6) varies along the direction of insertion, in particular from a large cross-section near the insertion opening (8) via a minimum cross-section in the central area to a larger cross-section near the bottom, and/or
b) **that** the cross-section of the individual air outlet openings (3-6) is uniform in the circumferential direction.

4. Collecting device according to any one of the preceding claims, **characterized in**
a) **that** the air outlet openings (3-6) form a certain flow resistance and thereby reduce the outlet velocity of the air flowing out through the air outlet openings (3-6), and
b) **that** the outlet velocity of the air flowing out of the collecting container (1) through the air outlet openings (3-6) is less than 5m/s, 4m/s, 3m/s, 2m/s, 1m/s, in particular in the range of 0.05m/s-2m/s, in particular substantially 0.5m/s.

5. Collecting device according to one of the preceding claims, **characterized in that** the container wall (2) has a flat paint filter (10), in particular on the inside of the container wall (2), the paint filter (10) retaining the paint and thereby preventing the paint from escaping from the collecting container (1) to the outside.

6. Collecting device according to claim 5, **characterized in**
a) **that** the paint filter (10) has at least one filter mat (10) which covers the container wall (2), in particular on the inside of the container wall (2), and/or
b) **that** the paint filter (10) completely covers the air outlet openings (3-6), and/or
c) **that** the paint filter (10) is replaceable, and/or
d) **that** the paint filter (10) can absorb the paint with a certain quantitative absorption capacity, the quantitative absorption capacity of the paint filter (10) being greater than the paint quantity produced during a rinsing process, in particular by a factor of 2, 3, 4, 5, 10 or 20, and/or
e) **that** the paint filter (10) extends over the entire lateral and lower container wall (2), and/or
f) **that** the collecting container (1) is closed at its top by a cover (7) which is flat, concave or convex in shape when viewed from the outside.

7. Collecting device according to one of the preceding claims, **characterized in**
a) **that** the collecting container (1) has a certain maximum immersion depth up to which the atomizer can be introduced into the collecting container (1) through the insertion opening (8),
b) **that** the atomizer has a negative pressure area between the bell plate and the shaping air ring, and
c) **that** the maximum immersion depth is such that the negative pressure area of the atomizer is inside the collecting container (1) during a rinsing process.

8. Collecting device according to any of the preceding claims, **characterized in**
a) **that** the insertion opening (8) of the collecting container (1) has a certain inner diameter,
b) **that** the atomizer has an atomizer housing with a certain front-side outer diameter,
c) **that** the inner diameter of the insertion opening (8) of the collecting container (1) is larger than the front-side outer diameter of the atomizer housing, so that ambient air can flow from outside into the collecting container (1) to the negative pressure area, and
d) **that** the inner diameter of the insertion opening (8) of the collecting container (1) is larger than 150%, 200%, 250% or 300% of the frontal outer diameter of the atomizer housing.

9. Collecting device according to any of the preceding claims, **characterized in**
a) **that** a certain amount of purge air is produced during a rinsing process, in particular from shaping air nozzles of the atomizer and from incoming ambient air,
b) **that** the collecting container (1) has a certain internal volume,
c) **that** the internal volume of the collecting container (1) is at least 1/3 and/or at most twice the amount of purge air, in particular essentially 2/3 of the amount of purge air,
d) **that** the collecting container (1) has a certain diameter and a certain height, wherein the diameter is preferably substantially equal to the height.

10. Operating method for a collecting device for collecting fluid media, in particular rinsing agents and paint residues, which are produced when rinsing an atomizer in a painting plant, comprising the following steps:
a) introducing the atomizer into the collecting device, and
b) flushing of the atomizer within the collecting device, whereby the fluid media to be collected are produced,
**characterized in**
c) **that** the collecting device is designed according to one of the preceding claims.

11. Operating method according to claim 10, **characterized in that**
a) during flushing, air escapes from the collecting container (1) through the container wall (2), in particular through the air outlet openings (3-6) in the container wall (2), and
b) that during rinsing the paint is retained in the container wall (2), in particular in the paint filter (10) of the container wall (2).

12. Operating method according to one of claims 10 or 11, **characterized in**
a) **that** during a rinsing process paint is produced in the collecting container (1), which is largely collected by the paint filter (10), while the remaining paint is discharged from the collecting container (1) via an outlet (9),
b) **that** the paint filter (10) is preferably replaced when it is clogged with the collected paint.

13. Operating method according to one of claims 10 to 12, **characterized in**
a) **that** the atomizer has a negative pressure area between the bell plate and the shaping air ring,
b) **that** the atomizer is introduced into the collecting container (1) during a rinsing process to such an extent that the negative pressure area of the atomizer is located inside the collecting container (1), and/or
c) **that** during a flushing process ambient air from outside flows into the collecting container (1) through the annular gap between the atomizer and the insertion opening (8) of the collecting container (1) into the negative pressure area of the atomizer.

14. Operating method according to one of claims 10 to 13, **characterized in**
a) **that** the atomizer has an electrostatic coating agent charging,
b) **that** the atomizer is introduced into the collecting container (1) by a painting robot,
c) **that** the painting robot is controlled by a robot controller; and
d) **that** the robot controller defines a restricted area around the collecting container (1) when the coating agent charging is switched on, so that the atomizer cannot be introduced into the collecting container (1) when the coating agent charging is switched on, in order to prevent a sparkover.

15. Operating method according to one of claims 10 to 14, **characterized in**
a) **that** the atomizer in the collecting device is flushed with a rinsing agent; and/or
b) **that** the atomizer applies a one-component paint or a two-component paint during painting operation and is cleaned inside and outside of the collection device from the one-component paint or the two-component paint.

## Revendications

1. Dispositif de collecte pour la collecte de milieux fluides, plus particulièrement d'un produit de nettoyage et de résidus de peinture, qui sont produits lors du nettoyage d'un pulvérisateur dans une installation de peinture, avec
a) un récipient de collecte (1),
b) une ouverture d'introduction (8), plus particulièrement sur le côté supérieur du récipient de collecte (1), pour l'introduction du pulvérisateur dans le récipient de collecte (1) et
c) une paroi latérale de récipient (2) qui délimite le récipient de collecte (1) à l'extérieur et qui est globalement imperméable à la peinture, afin d'empêcher une sortie de la peinture hors du récipient de collecte (1), dans lequel la paroi latérale de récipient (2) du récipient de collecte (1) est au moins partiellement perméable à l'air, afin que l'air humide puisse s'échapper de l'espace interne du récipient de collecte (1) vers l'extérieur,
d) une évacuation (9) afin d'évacuer la peinture et/ou le produit de nettoyage hors du récipient de collecte (1) et
e) un filtre à peinture (10), qui est disposé dans le trajet d'écoulement vers l'évacuation (9), de sorte que, lors de l'écoulement vers l'évacuation (9), le filtre à peinture (10) doit être traversé,
**caractérisé en ce que**
f) la paroi latérale de récipient (2) du récipient de collecte (1) comprend de nombreuses ouvertures de sortie d'air (3 - 6), dans lequel l'air humide peut s'échapper de l'espace interne du récipient de collecte (1) à travers les ouvertures de sortie d'air (3 - 6) vers l'extérieur.

2. Dispositif de collecte selon la revendication 1, **caractérisé en ce que**
a) les ouvertures de sortie d'air (3 - 6) présentent ensemble une section transversale totale déterminée,
b) la paroi du récipient (2) présente une surface de paroi déterminée,
c) la section transversale totale des ouvertures de sortie d'air (3 - 6) représente au moins 5 %, 10 % ou 20 % de la surface totale de la paroi du récipient (2).

3. Dispositif de collecte selon l'une des revendications précédentes, **caractérisé en ce que**
a) la section transversale des différentes ouvertures de sortie d'air (3 - 6) varie le long de la direction d'introduction, plus particulièrement d'une grande section transversale près de l'ouverture d'introduction (8), en passant par une section transversale minimale dans la partie centrale, à une section transversale plus grande près du fond et/ou
b) la section transversale des différentes ouvertures de sortie d'air (3 - 6) est uniforme dans la direction de la circonférence.

4. Dispositif de collecte selon l'une des revendications précédentes, **caractérisé en ce que**
a) les ouvertures de sortie d'air (3 - 6) forment une résistance à l'écoulement déterminée et réduisent ainsi la vitesse de sortie de l'air sortant par les ouvertures de sortie d'air (3 - 6) et
b) la vitesse de sortie de l'air sortant du récipient de collecte (1) par les ouvertures de sortie d'air (3 - 6) est inférieure à 5 m/s, 4 m/s, 3 m/s, 2 m/s, 1 m/s, plus particulièrement dans une plage de 0,05 m/s à 2 m/s, plus particulièrement globalement de 0,5 m/s.

5. Dispositif de collecte selon l'une des revendications précédentes, **caractérisé en ce que** la paroi de récipient (2) comprend un filtre à peinture (10) plat, plus particulièrement sur la face interne de la paroi de récipient (2), dans lequel le filtre à peinture (10) retient la peinture et empêche ainsi la peinture de sortir du récipient de collecte (1) vers l'extérieur.

6. Dispositif de collecte selon la revendication 6, **caractérisé en ce que**
a) le filtre à peinture (10) comprend au moins une nette de filtrage (10) qui recouvre la paroi de récipient (2), plus particulièrement sur la face interne de la paroi de récipient (2) et/ou
b) le filtre à peinture (10) recouvre entièrement les ouvertures de sortie d'air (3 - 6) et/ou
c) le filtre à peinture (10) est remplaçable et/ou
d) le filtre à peinture (10) peut absorber la peinture avec une capacité d'absorption quantitative déterminée, dans lequel la capacité d'absorption quantitative du filtre à peinture (10) est supérieure à la quantité de peinture qui apparaît lors d'un processus de nettoyage, plus particulièrement d'un facteur 2, 3, 4, 5, 10 ou 20 et/ou
e) le filtre à peinture (10) s'étend sur toute la paroi latérale et inférieure (2) et/ou
f) le récipient de collecte (1) est fermé, sur son côté supérieur, par un couvercle (7), qui présente, vu de l'extérieur, une forme plane, concave ou convexe.

7. Dispositif de collecte selon l'une des revendications précédentes, **caractérisé en ce que**
a) le récipient de collecte (1) présente une profondeur d'immersion maximale déterminée, jusqu'à laquelle le pulvérisateur peut être introduit dans le récipient de collecte (1) à travers l'ouverture d'introduction (8),
b) le pulvérisateur comprend, entre le plateau à cloche et l'anneau d'air de guidage, une zone de dépression et
c) la profondeur d'immersion maximale est telle que la zone de dépression du pulvérisateur se trouve, lors d'un processus de nettoyage, à l'intérieur du récipient de collecte (1).

8. Dispositif de collecte selon l'une des revendications précédentes, **caractérisé en ce que**
a) l'ouverture d'introduction (8) du récipient de collecte (1) présente un diamètre intérieur déterminé,
b) le pulvérisateur comprend un boîtier de pulvérisateur avec un diamètre extérieur frontal déterminé,
c) le diamètre intérieur de l'ouverture d'introduction (8) du récipient de collecte (1) est supérieur au diamètre extérieur frontal du boîtier de pulvérisateur, afin que l'air environnant puisse s'écouler de l'extérieur vers le récipient de collecte (1) dans la zone de dépression et
d) le diamètre intérieur de l'ouverture d'introduction (8à du récipient de collecte (1) est supérieur à 150 %, 200 %, 250 % ou 300 % du diamètre extérieur frontal du boîtier de pulvérisateur.

9. Dispositif de collecte selon l'une des revendications précédentes, **caractérisé en ce que**
a) lors d'un processus de nettoyage, une quantité d'air de nettoyage déterminée est produite, plus particulièrement à partir des buses d'air de guidage du pulvérisateur et de l'air environnant entrant,
b) le récipient de collecte (1) présente un volume intérieur déterminé,
c) le volume intérieur du récipient de collecte (1) représente au moins 1/3 et/ou au plus le double de la quantité d'air de nettoyage, plus particulièrement globalement 2/3 de la quantité d'air de nettoyage,
d) le récipient de collecte (1) présente un diamètre déterminé et une hauteur déterminée, dans lequel le diamètre est de préférence globalement égal à la hauteur.

10. Procédé de fonctionnement pour un dispositif de collecte pour la collecte de milieux fluides, plus particulièrement d'un produit de nettoyage et de résidus de peinture qui sont produits lors du nettoyage d'un pulvérisateur dans une installation de peinture, avec les étapes suivantes :
a) introduction du pulvérisateur dans le dispositif de collecte et
b) nettoyage du pulvérisateur à l'intérieur du dispositif de collecte, dans lequel les milieux fluides à collecter sont produits,
**caractérisé en ce que**
c) le dispositif de collecte est conçu selon l'une des revendications précédentes.

11. Procédé de fonctionnement selon la revendication 10, **caractérisé en ce que**
a) lors du nettoyage, l'air sort du récipient de collecte (1) à travers la paroi du récipient (2), plus particulièrement à travers les ouvertures de sortie d'air (3 - 6) dans la paroi du récipient (2) et
b) lors du nettoyage, la peinture est retenue dans la paroi du récipient (2), plus particulièrement dans le filtre à peinture (10) de la paroi du récipient (2).

12. Procédé de fonctionnement selon l'une des revendications 10 ou 11, **caractérisé en ce que**
a) lors d'un processus de nettoyage, de la peinture apparaît dans le récipient de collecte (1), qui est collectée en grande partie par le filtre à peinture (10), tandis que le reste de la peinture est évacué par une évacuation (9) hors du récipient de collecte (1),
b) le filtre à peinture (10) est remplacé de préférence lorsqu'il est encrassé avec la peinture collectée.

13. Procédé de fonctionnement selon l'une des revendications 10 à 12, **caractérisé en ce que**
a) le pulvérisateur présente, entre le plateau à cloche et l'anneau de guidage d'air, une zone de dépression,
b) le pulvérisateur est introduit, lors du processus de nettoyage, dans le récipient de collecte (1), jusqu'à ce que la zone de dépression du pulvérisateur se trouve à l'intérieur du récipient de collecte (1) et/ou
c) lors d'un processus de nettoyage, l'air environnant entre, de l'extérieur, à travers l'interstice annulaire entre le pulvérisateur et l'ouverture d'introduction (8) du récipient de collecte (1), dans le récipient de collecte (1) dans la zone de dépression du pulvérisateur.

14. Procédé de fonctionnement selon l'une des revendications 10 à 13, **caractérisé en ce que**
a) le pulvérisateur comprend un dispositif de charge électrostatique du produit de revêtement,
b) le pulvérisateur est introduit dans le récipient de collecte (1) par un robot de peinture,
c) le robot de peinture est contrôlé par une commande robotique et
d) la commande robotique définit, lorsque le dispositif de charge électrostatique du produit de revêtement est mis en marche, un espace de blocage autour du récipient de collecte (1), de sorte que, lorsque le dispositif de charge électrostatique du produit de revêtement est mis en marche, le pulvérisateur ne peut pas être introduit dans le récipient de collecte (1), afin d'éviter l'apparition d'un arc électrique.

15. Procédé de fonctionnement selon l'une des revendications 10 à 14, **caractérisé en ce que**
a) le pulvérisateur est nettoyé, dans le dispositif de collecte, avec un produit de nettoyage et/ou
b) le pulvérisateur applique, lors du fonctionnement, une peinture monocomposant ou une peinture bicomposant et est nettoyé, à l'intérieur et à l'extérieur, de la peinture monocomposant ou de peinture bicomposant dans le dispositif de collecte.
